# EUROPEAN PATENT SPECIFICATION

(11) **EP 1 314 864 B1**
(45) Date of publication and mention of the grant of the patent: **03.01.2007**
(21) Application number: 01128129.2
(22) Date of filing: 27.11.2001
(51) Int. Cl.: F01N 3/20

(54) **Injector for engine exhaust gas purifying apparatus**
Einspritzventil für eine Abgasreinigungsvorrichtung
Injecteur pour dispositif de purification de gaz d'échappement

(43) Date of publication of application: 28.05.2003
(73) Proprietor: Toyota Jidosha Kabushiki Kaisha, Toyota-shi, Aichi-ken, 471-8571 (JP)
(72) Inventor: Takagi, Takaaki, Obu-shi, Aichi-ken, 476-0061 (JP); Makimura, Toshiro, Obu-shi, Aichi-ken, 476-0061 (JP)
(74) Representative: TBK-Patent

(56) References cited:
- EP-A- 0 101 822
- EP-A- 1 138 891
- DE-C- 19 806 265
- GB-A- 2 190 428
- JP-A- 4 358 716
- US-B1- 6 203 770

## Description

### BACKGROUND OF THE INVENTION

### 1. Field of the Invention

The invention generally relates to an exhaust system comprising an injector for a combustion engine.

### 2. Description of Related Art

The exhaust gas discharged directly from an engine includes nitrogen oxides (hereinafter, simply referred to as NOx). Since NOx pollutes the atmosphere, the exhaust gas must be purified before being discharged into the atmosphere. Removing NOx with a catalytic converter using hydrocarbon (hereinafter, simply referred to as HC) as a reducing agent is known as a technique of removing NOx in the exhaust gas. HC is also included in the engine exhaust gas, but the amount thereof is small (particularly small in a diesel engine), resulting in poor reduction efficiency of the catalytic converter. In view of this, art for improving the reduction efficiency of the catalytic converter is described in, e.g., Japanese Patent Laid-Open Publication No. 4-358716. In this art, a reducing agent (e.g., engine fuel, alcohol or the like) is introduced into the engine exhaust gas so as to increase the amount of HC, thereby improving the reduction efficiency of the catalytic converter.

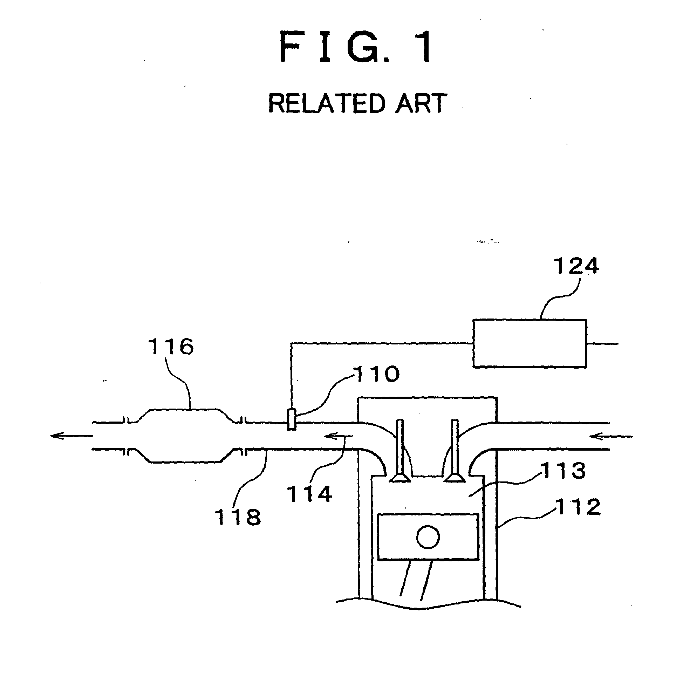

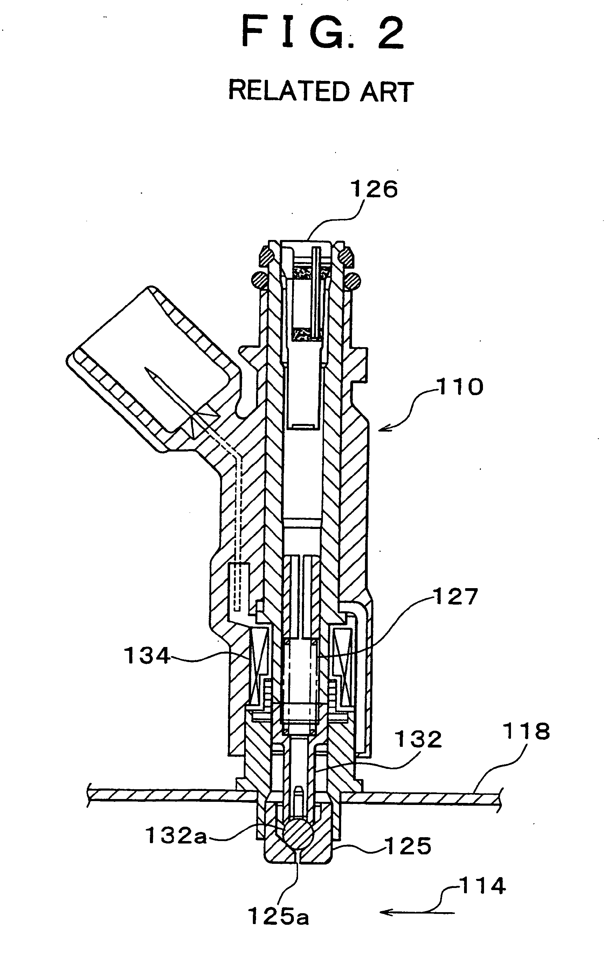

An exemplary engine exhaust gas purifying apparatus regarding the above related art will now be described with reference to Figs. 1 and 2. Fig. 1 is an illustration of an engine exhaust gas purifying apparatus. Fig. 2 is a cross-sectional view of an injector and an exhaust passage (a wall on the opposite side of the exhaust passage 118 is omitted in the illustration of Fig. 2. The same applies to the following figures). Engine exhaust gas 114 flows from right to left in Fig. 2. For the injector 1.10, the right side of the injector 110 corresponds to upstream, and the left side thereof corresponds to downstream in Fig. 2.

As shown in Fig. 1, the engine exhaust gas 114 resulting from combustion in a combustion chamber 113 of an engine 112 is discharged into an exhaust passage 118. The injector 110 is mounted to the exhaust passage 118. As shown in Fig. 2, a seat 125 is mounted at the tip end of the injector 110 (at the bottom of Fig. 2), and an injection nozzle 125a is formed in the seat 125. A communicating passage is formed between a fuel supply port 126 and the seat 125, and compressed fuel is supplied from a fuel pump 124 into the fuel supply port 126. While a solenoid 134 is not excited, a ball 132a mounted at the tip end of a valve 132 is pressed against the seat 125 by a spring 127, closing the injection nozzle 125a. When the solenoid 134 is excited by electric power supplied from an electric control circuit (not shown) controlling the engine exhaust gas purifying apparatus, magnetic force is generated, whereby the valve 132 is moved upward in Fig. 2. As a result, a gap is produced between the ball 132a of the valve 132 and the seat 125, and the fuel is injected from the injection nozzle 125a into the exhaust passage 118.

The fuel thus injected in a spray form from the injector 110 into the engine exhaust gas 114 flowing through the exhaust passage 118 is mixed with the engine exhaust gas 114, increasing the amount of HC in the exhaust gas 114. The engine exhaust gas 114 including the increased amount of HC then passes through a catalytic converter 116, in which NOx is removed from the engine exhaust gas 114 by reduction. The engine exhaust gas 114 thus purified is discharged into the atmosphere.

The injection nozzle 125a formed at the tip of the injector 110 of the conventional engine exhaust gas purifying apparatus is exposed directly to the flow of the engine exhaust gas 114 including fine soot particles. Therefore, during continuous operation of the engine, the soot included in the engine exhaust gas 114 progressively adheres to the injection nozzle 125a, resulting in clogging of the injection nozzle 125a.

Document DE 198 06 265 C1 describes an injection system for injecting a reducing agent into the exhaust gas flow of a combustion engine upstream of a catalyst. The system comprises an electromagnetic valve which is controlled by a control unit such that a sufficient amount of reducing agent is injected into the exhaust gas flow. To improve the atomization of the injected reducing agent, an impingement wall is provided wherein the injection nozzle and the impingement wall are located such that the reducing agent is injected through the injection nozzle to impinge on the impingement wall. After the impingement of the impingement wall, the atomized reducing agent is mixed with the exhaust gas and introduced into the catalyst.

Document GB 2 190 428 A discloses an injector with a protector and two impingement walls.

Document EP 1 138 891 A2 discloses an exhaust system comprising an injector for injecting a reducing agent into the exhaust gas flow of a combustion engine. To improve the atomization of the injected reducing agent, a deviation channel is provided which is tilted with respect to..the actual direction of the injector. The deviation channel is located such that the spray is directed toward a downstream direction towards the center of the exhaust passage to achieve a sufficient mixture of the reducing agent and the exhaust gas.

### SUMMARY OF THE INVENTION

It is the object underlying the invention to provide an exhaust system comprising an injector for a combustion engine which enables that injected reducing agent is sufficiently atomized and a fine spray of a reducing agent is established, and allows to enter the exhaust passage in a spread-out form.

This object is solved by the features of claim 1. According to the invention, the impingement wall of the exhaust system directly leads to the opening of the injector allowing the atomized and spread-out reducing agent to enter the exhaust gas flow. This ensures that the atomized reducing agent enters the exhaust gas passage in a spread-out form avoiding that a part of the reducing agent adheres to the impingement wall and does not reach the exhaust gas passage in the desired spread-out form. The desired effect is based on the feature that the impingement wall directly leads to the opening the exhaust gas passage.

Further advantageous features are cited in the subclaims.

According to the invention, an injector injects a reducing agent into an exhaust passage formed between an engine and a catalytic converter in an engine exhaust gas purifying apparatus for purifying engine exhaust gas by the catalytic converter mounted in the engine exhaust passage. The injector includes at a tip end thereof a protector for preventing an injection nozzle of the injector from being directly exposed to an engine exhaust gas flow.

According to the injector, the protector is provided at the tip end of the injector. Therefore, the injection nozzle is not directly exposed to the engine exhaust gas flow, preventing soot included in the engine exhaust gas from adhering to the injection nozzle. This structure is thus capable of preventing clogging of the injection nozzle of the injector resulting from adhesion of the soot.

According to the invention, the protector includes an impingement wall on which the reducing agent injected from the injection nozzle impinges.

In the injector, the impingement wall on which the reducing agent injected from the injection nozzle impinges is formed in the protector. The reducing agent injected from the injection nozzle in a spray form is atomized into finer particles upon impinging on the impingement wall. As a result, the reducing agent is mixed with the engine exhaust gas more uniformly. The protector may include a wall entirely surrounding the injection nozzle of the injector. Since the injection nozzle is entirely surrounded by the wall, the engine exhaust gas can be prevented from reaching the injection nozzle from the downstream side of the protector. As a result, adhesion of the soot to the injection nozzle can be prevented more reliably. A projecting length and an inner diameter of the cylindrical wall of the protector may be set such that the reducing agent injected from the injection nozzle may not contact an inner peripheral surface of the cylindrical wall.

In the injector the injection nozzle may be provided outside an inner wall surface of the exhaust passage so that only the protector projects into the exhaust passage. This prevents the injector body from being exposed to the engine exhaust gas, whereby temperature rise in the injector body can be prevented.

The invention is described in more detail with respect to the preferred embodiments of the invention.

### BRIEF DESCRIPTION OF THE DRAWINGS

Fig. 1 is an illustration of a conventional engine exhaust gas purifying apparatus;
Fig. 2 is a cross-sectional view of a conventional injector and an exhaust passage;
Fig. 3 is a cross-sectional view of the tip end portion of an injector according to the embodiment of the invention.

### DETAILED DESCRIPTION OF THE PREFERRED EMBODIMENTS

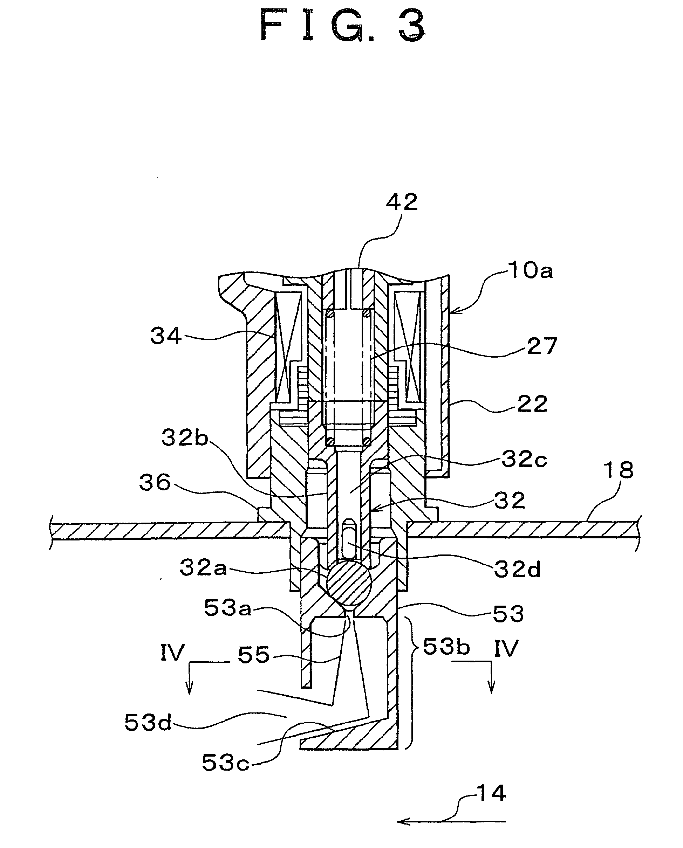

Hereinafter, an injector according to the embodiment of the invention will be described with reference to Fig. 3. Fig. 3 is a cross-sectional view of the tip end portion of the injector and the exhaust passage.

As shown in Fig. 3, in the injector 10a of the embodiment, a protector 53b has a cylindrical shape with its tip end closed. An impingement wall 53c is formed at the tip end of the protector 53b (i.e., at the location facing an injection nozzle 53a) so that injected fuel 55 impinges thereon. The impingement wall 53c is tilted with respect to the axial direction of the injector 10a. The tilt angle of the impingement wall 53c is determined such that the fuel impinging on the impingement wall 53c is directed toward the downstream side of the engine exhaust gas 14 and toward the center of the exhaust passage 18.

Corresponding to the impingement wall 53c, an opening 53d for discharging the fuel from the protector 53b into the exhaust passage 18 is formed in the tip end portion of the downstream sidewall (located downstream of the engine exhaust gas 14) of the protector 53b. The opening 53d is sized so that the fuel flow may not impinge on the inner wall of the protector 53b after impinging on the impingement wall 53c.

In the injector 10a having such a structure, the fuel 55 injected from the injection nozzle 53a in a spray form is atomized into finer particles when impinging on the impingement wall 53c. As a result, the fuel 55 is directed toward the downstream side of the engine exhaust gas 14 and toward the center of the exhaust passage 18. The fuel 55 is thus discharged from the opening 53d formed in the tip end portion of the sidewall of the protector 53b into the exhaust passage 18, and is mixed with the engine exhaust gas 14. Since the fuel flow is discharged from the protector 53b into the exhaust passage 18 as finer particles after impinging on the impingement wall 53c, the fuel is mixed with the engine exhaust gas 14 more uniformly. Moreover, since the fuel discharged from the protector 53b flows in the same direction as that of the engine exhaust gas 14 toward the center of the exhaust passage, it is efficiently mixed with the engine exhaust gas 14 without adhering to the inner wall surface of the exhaust passage 18.

## Claims

1. An exhaust system comprising an injector (10a) for injecting fuel as a reducing agent into an exhaust passage (18) formed between an engine and a catalytic converter in an engine exhaust gas purifying apparatus for purifying engine exhaust gas by the catalytic converter mounted in the engine exhaust passage (18), wherein the injector (10a) includes at a tip end thereof a protector (53b) for preventing an injection nozzle (53a) of the injector (10a) from being directly exposed to an engine exhaust gas flow (14)
wherein the protector (53b) includes an impingement wall (53c) on which the fuel injected from the injection nozzle (53a) impinges, **characterised in that** the protector (53b) has a cylindrical shape with its tip end closed, the impingement wall (53c) is formed at the tip end of the protector (53b) so as to face the injection nozzle (53a), and the protector (53b) further has an opening (53d) formed in the tip end portion of a side wall of the protector (53b) for discharging the fuel from the protector (53b) into the exhaust passage (18).

2. An exhaust system according to claim 1, **characterized in that** the protector (53b) includes a cylindrical wall, wherein the projecting length and the inner diameter of the cylindrical wall of the protector (53b) are set such that the reducing agent injected from the injection nozzle (53a) may not contact an inner peripheral surface of the cylindrical wall.

3. An exhaust system according to claims 1 or 2, **characterized in that** the injection nozzle (53a) is provided outside an inner wall surface of the exhaust passage so that only the protector (53b) projects into the exhaust passage (18).

4. An exhaust system according to claim 1, **characterized in that** a wall surface of the impingement wall (53c) is formed such that the reducing agent flows toward a downstream side of the engine exhaust passage (18) after impinging on the impingement wall (53c).

5. An exhaust system according to claim 4, **characterized in that** the impingement wall (53c) is tilted with respect to an axial direction of the injector (10a) so that the reducing agent atomized by impingement of the impingement wall (53c) is directed toward a downstream side of the exhaust gas and toward a center of the exhaust passage (18).

6. An exhaust system according to claims 1 to 5, **characterized in that** the protector (53b) is detachably mounted to the injector (10).

## Patentansprüche

1. Ein Abgassystem umfassend einen Injektor (10a) für Einspritzung des Kraftstoffes als ein Reduktionsmittel in einen Auspuffdurchgang (18), der zwischen einem Motor und einem Katalysator in einer Motorabgasreinigungsanlage für Reinigung eines Motorabgases durch den Katalysator geformt ist, der in dem Motorauspuffdurchgang (18) montiert ist,
wobei der Injektor (10a) an seinem Spitzenende eine Schutzeinrichtung (53b) dafür enthält, dass eine Einspritzdüse (53a) des Injektors (10a) davor bewahrt wird, dass sie einem Motorabgasstrom (14) direkt ausgesetzt wird,
wobei die Schutzeinrichtung (53b) eine Anschlagwand (53c) enthält, woran der Kraftstoff, der von der Einspritzdüse (53a) eingespritzt wird, angeschlagen wird, **dadurch gekennzeichnet, dass** die Schutzeinrichtung (53b) eine zylinderische Form hat, wobei ihr Spitzenende geschlossen ist, die Anschlagwand (53c) am Spitzenende der Schutzeinrichtung (53b) so geformt ist, dass sie der Einspritzdüse (53a) gegenübersteht, und die Schutzeinrichtung (53b) ferner eine Öffnung (53d) hat, die in dem Spitzenendeteil einer Seitenwand der Schutzeinrichtung (53b) zum Abführen des Kraftstoffes von der Schutzeinrichtung (53b) in den Auspuffdurchgang (18) geformt ist.

2. Ein Abgassystem nach Anspruch 1, **dadurch gekennzeichnet, dass** die Schutzeinrichtung (53b) eine zylinderförmige Wand enthält, wobei die hervorstehende Länge und der Innendurchmesser der zylinderförmigen Wand der Schutzeinrichtung (53b) so eingestellt werden, dass das Reduktionsmittel, das von der Einspritzdüse (53a) eingespritzt wird, mit einer inneren Umfangsfläche der zylinderförmigen Wand nicht Kontakt aufnehmen kann.

3. Ein Abgassystem nach Anspruch 1 oder 2, **dadurch gekennzeichnet, dass** die Einspritzdüse (53a) außerhalb einer Innenwandfläche des Auspuffdurchganges vorgesehen ist, so dass nur die Schutzeinrichtung (53b) in den Auspuffdurchgang (18) hervorsteht.

4. Ein Abgassystem nach Anspruch 1, **dadurch gekennzeichnet, dass** eine Wandfläche der Anschlagwand (53c) so geformt ist, dass das Reduktionsmittel zu einer Stromabwärtsseite des Motorauspuffdurchganges (18) fließt, nachdem es an die Anschlagwand (53c) angeschlagen wird.

5. Ein Abgassystem nach Anspruch 4, **dadurch gekennzeichnet, dass** die Anschlagwand (53c) mit Bezug auf eine axiale Richtung des Injektors (10a) geneigt ist, so dass das Reduktionsmittel, das durch Anschlagen der Anschlagwand (53c) verdüst wird, auf eine Stromabwärtsseite des Abgases und auf ein Zentrum des Auspuffdurchganges (18) gerichtet wird.

6. Ein Abgasystem nach Ansprüchen 1 bis 5, **dadurch gekennzeichnet, dass** die Schutzeinrichtung (53b) lösbar zu dem Injektor (10) montiert ist.

## Revendications

1. Système d'échappement comprenant un injecteur (10a) destiné à injecter du carburant en tant qu'agent réducteur dans un conduit d'échappement (18) formé entre un moteur et un convertisseur catalytique dans un dispositif de purification de gaz d'échappement du moteur destiné à purifier le gaz d'échappement d'un moteur par le biais du convertisseur catalytique monté dans le conduit d'échappement du moteur (18), où l'injecteur comprend, au niveau d'une extrémité de bout de celui-ci un élément de protection destiné à empêcher qu'une buse d'injection de l'injecteur (10a) ne soit directement opposée à un flux de gaz d'échappement du moteur (14),
où l'élément de protection (53b) comprend une paroi de collision (53c) avec laquelle le carburant injecté depuis la buse d'injection (53a) entre en collision, **caractérisé en ce que** l'élément de protection (53b) présente une forme cylindrique, son extrémité de bout étant fermée, la paroi de collision (53c) est formée à l'extrémité de bout de l'élément de protection (53b) de manière à faire face à la buse d'injection (53a), et l'élément de protection (53b) comporte en outre une ouverture (53d) formée dans la partie d'extrémité de bout d'une paroi latérale de l'élément de protection (53b) destiné à évacuer le carburant de l'élément de protection (53b) dans le conduit d'échappement (18).

2. Système d'échappement selon la revendication 1, **caractérisé en ce que** l'élément de protection (53b) comprend une paroi cylindrique, où la longueur de projection et le diamètre intérieur de la paroi cylindrique de l'élément de protection (53b) sont établis de sorte que l'agent réducteur injecté depuis la buse d'injection (53a) ne puisse pas entrer en contact avec une surface périphérique intérieure de la paroi cylindrique.

3. Système d'échappement selon les revendications 1 ou 2, **caractérisé en ce que** la buse d'injection (53a) est prévue à l'extérieur d'une surface de paroi intérieure du conduit d'échappement, de sorte que seul l'élément de protection (53b) dépasse dans le conduit d'échappement (18).

4. Système d'échappement selon la revendication 1, **caractérisé en ce que** une surface de paroi de la paroi de collision (53c) est formée de sorte que l'agent réducteur s'écoule vers un côté aval du conduit d'échappement de moteur (18) après être en collision avec la paroi de collision (53c).

5. Système d'échappement selon la revendication 4, **caractérisé en ce que** la paroi de collision (53c) est inclinée par rapport à une direction axiale de l'injecteur (10a) de sorte que l'agent réducteur atomisé par la collision avec la paroi de collision (53c) est dirigé vers un côté aval du gaz d'échappement et vers le centre du conduit d'échappement (18).

6. Système d'échappement selon les revendications 1 à 5, **caractérisé en ce que** l'élément de protection (53b) est monté de manière amovible sur l'injecteur (10).
